# EUROPÄISCHE PATENTSCHRIFT

(11) **EP 0 567 882 B1**
(45) Veröffentlichungstag und Bekanntmachung des Hinweises auf die Patenterteilung: **23.10.1996**
(21) Anmeldenummer: 93106307.7
(22) Anmeldetag: 19.04.1993
(51) Int. Cl.: C08L 95/00

(54) **Verfahren zur Einfärbung von Asphalt**
Process for dyeing asphalt
Procédé de teinture d'asphalts

(30) Priorität: 30.04.1992 DE 4214195
(43) Veröffentlichungstag der Anmeldung: 03.11.1993
(73) Patentinhaber: BAYER AG, 51368 Leverkusen (DE)
(72) Erfinder: Linde, Günter, Dr., W-4150 Krefeld (DE); Eitel, Manfred, Dr., W-4152 Kempen (DE); Büchner, Gerald, Dipl.-Ing., W-4150 Krefeld-Hüls (DE); Kresse, Peter, Dr., W-4150 Krefeld (DE); Teichmann, Günther, Dr., W-4150 Krefeld (DE)

(56) Entgegenhaltungen:
- DE-A- 2 363 733
- FR-A- 2 129 218

## Beschreibung

Die vorliegende Erfindung betrifft ein Verfahren zur Einfärbung von Asphalt und/oder Bitumen mit anorganischen Pigmentgranulaten.

Die Verarbeitung von Pigmenten in Pulverform im Hinblick auf Staubentwicklung und Dosierbarkeit wird zunehmend kritisch betrachtet. Zum einen wird bei der Verarbeitung auf eine Verringerung der Gefährdung bzw. Belästigung von Mensch und Umwelt geachtet, zum anderen führt die Beachtung von Qualitätskriterien zu erhöhten Anforderungen hinsichtlich des Farbeindrucks. Dieser wird wesentlich mitbestimmt durch die Einhaltung höchstmöglicher Genauigkeit bei der Rezeptur, d.h. eine verbesserte Dosierung führt zu mehr Qualitätskonstanz. Dagegen lassen sich pulverförmige Pigmente wegen der Adhäsionskräfte häufig nur ungenau dosieren.

Staubbelästigung und schlechte Dosierbarkeit wiegen besonders schwer bei Verfahren, die aufgrund der Umweltauflagen und der Kostensituation nur den Einsatz billiger, dosierfähiger und staubarmer Pigmente erlauben. Das ist der Fall bei der Einfärbung von Asphalten/Bitumen für den Bau von Straßen und Wegen.

Hier werden vorwiegend preisgünstige Eisenoxidrotverbindungen in geringer Dosierhöhe eingesetzt. Aber auch andere anorganische Pigmente, wie z.B. Eisenoxidgelb, Titandioxid oder Chromoxidgrün finden Anwendung.

Es hat in der Vergangenheit nicht an Versuchen gefehlt, mit der Staubbelästigung fertig zu werden. So ist es durchaus üblich, Pigmente für die Einfärbung von Asphalten in Kunststoffsäcken abzufüllen und mit der Verpackung die gesamte Menge an Pigment in den heißen Asphalt einzubringen. Dabei muß das Verpackungsmaterial deutlich unterhalb der Verarbeitungstemperatur schmelzen, um sich schnell genug aufzulosen. Auch muß in den diskontinuierlichen Mischanlagen eine ausreichende Zeit aufgewendet werden, um eine vollständige, gute Dispergierung der Charge an Pigment zu gewährleisten.

Neuere Anlagen arbeiten kontinuierlich. Hierbei ist eine chargenweise Zugabe des Pigmentpulvers nicht mehr möglich, sondern aus Qualitätsgründen muß eine kontinuierliche Dosierung der Pigmente erfolgen.

Verfahren zur Herstellung von nichtstaubenden Pigmentgranulaten sind wiederholt beschrieben worden, zum Beispiel für das Einfarben von Baustoffen in das DE-A 3 619 363, EP-A 0 365 046 B 1 und DE-A 3 918 694. Es handelt sich hierbei um Mikrogranulate, die zwar staubfrei und gut dosierbar sind, aber nicht für die Einfärbung von Asphalt einsetzbar sind.

Auch im Zusammenhang mit Asphalt sind Granulate beschrieben. In der JP-A 74 005 210 wird eine bitumenhaltige Beschichtung beschrieben, die aus Metall- oder Metalloxidpigmenten besteht, an der Oberfläche aufschwimmt und so die schwarze Farbe des Bitumens überdeckt. Kreidung und Abrieb führen bei nur oberflächlicher Einfärbung zu einem schlechteren Farbeindruck bei Gebrauchsdauer.

In der GB-A 2 185 490 werden ölumhüllte Farbpigmentgranulate für die Oberflächen von Sportstätten offenbart. Es handelt sich aber hierbei um eine Anwendung außerhalb von typischem Asphalt, da es sich um diskretes Material handelt, das als Schicht auf einen Untergrund mit dem Rechen bewegt werden kann.

Aus der JP-A 57 205 447 geht die Verwendung von Rotschlamm aus der Bauxitherstellung in der Asphaltindustrie hervor. Hierbei wird der Rotschlamm durch "Flushen" in eine rotbraune Slurry von Eisenoxid in öl überführt, die dann mit Asphalt gemischt wird.

In der EP-A 191 278 werden wasserhaltige, feuchte Granulate von Eisenoxid zur Einfärbung von Baustoffen und Bitumenverbindungen nur unter dem Gesichtspunkt der Staubvermeidung genannt.

Alle diese Verfahren verbinden nicht die Herstellung und Verwendung staubarmer, rieselfähiger, dosierbarer Granulate mit guten Dispergiereigenschaften zur gleichmäßigen Einfärbung von Asphalt.

Aufgabe dieser Erfindung war es also, ein Verfahren für die Einfärbung von Asphalt zur Verfügung zu stellen, welches die Nachteile des beschriebenen Standes der Technik nicht aufweist.

Es wurde nun ein Verfahren gefunden, welches diese Anforderungen erfüllt.

Gegenstand dieser Erfindung ist ein Verfahren zur Einfärbung von Asphalt und/oder Bitumen mit anorganischen Pigmentgranulaten, welche dadurch gekennzeichnet ist, daß anorganische Pigmente unter Zusatz von Ölen, die eine kinematische Viskosität bei 40°C (DIN 51562) von 1,6 bis 1.500 mm²/s aufweisen und/oder Wachsen, Polyolen, Polyethern und Paraffinen mit Tropfpunkten (DIN 51 801, ASTM D 566) zwischen 50 und 180°C als Bindemittel in einer Menge von 0,1 bis 10 Gew-%, bezogen auf die anorganischen Pigmente granuliert und mit dem Asphalt und/oder Bitumen vermischt werden.

Nach dem erfindungsgemäßen Verfahren ist es auf kostengünstige Weise möglich, eine gleichmäßige Durchfärbung des Asphaltes zu erreichen. Dadurch bleibt auch der Farbeindruck des Asphaltes bei langem Gebrauch konstant.

Die erfindungsgemäß eingesetzten Granulate können bevorzugt durch Aufbaugranulation, Kompaktierung oder Sprühgranulation erhalten werden, unabhängig davon, ob im Herstellungsprozeß der Pigmente eine Naßphase durchlaufen wurde.

Als Pigmente kommen dabei wegen der Verarbeitungstemperatur grundsätzlich anorganische Pigmente in Betracht. Bevorzugt sind die anorganischen Pigmente Eisenoxidrot (α-Fe₂O₃), Eisenoxidgelb (α-FeOOH), Chromoxidgrün (Cr₂O₃) und/oder Titandioxid (TiO₂).

Diese Pigmente müssen mit dem erfindungsgemäßen Bindemittel granuliert werden, das zugleich aufgrund seiner Affinität zu Asphalt/Bitumen die Dispergierung nicht verzögert. Dabei kommen als ölhaltige Stoffe Maschinenöl und Bitumenemulsionen und/oder Wachse/Paraffine als preisgünstige Bindemittel in Betracht. Dabei ist es unerheblich, ob diese Verbindungen synthetischer oder natürlicher Herkunft sind. Als einfache Herstellungsverfahren sind in erster Linie Aufbaugranulation oder Kompaktierungsgranulation anzusehen.

Bevorzugt werden die erfindungsgemäßen Bindemittel in einer Menge von 0,5 bis 6 Gew.-%, bezogen auf die anorganischen Pigmente, zugesetzt.

Es ist auch möglich, Binde- und Dispergiermittel unterschiedlicher Art einzusetzen. So können zusätzlich anorganische Bindemittel, z.B. Salze wie Wasserglas, Phosphate, Borate, Silikate, Aluminate sowie Kombinationen hiervon eingesetzt werden. Diese Art der Herstellung kann verbunden werden mit einer anschließenden Nachbehandlung der Granulate mit den erfindungsgemäßen, in Asphalten löslichen Bindemitteln. Aber auch Verbindungen mit größeren organischen Molekülen, wie Ligninsulfonat oder Melasse, Stärke, Paraffin, lassen sich zusätzlich bei der Herstellung der erfindungsgemäßen Granulate einsetzen. Alle Zusatzstoffe dürfen jedoch die Eigenschaften der Endprodukte in ihrer Gebrauchsfähigkeit nicht verschlechtern.

Als Testverfahren kommen in Frage (mit dem Bereich der Gebrauchswerte): Stabilität nach Marshall 3,3 bis 8 kN; Fließwerte nach Marshall 2,0 bis 4,0 mm; Hohlraumgehalt 3,0 bis 5,0 %.

Diese Spezifizierung der Gebrauchseigenschaften wird angegeben in: "The Shell Bitumen Handbook", Shell Bitumen 1990, Tabelle 16.1, S. 250 bzw. Tabelle 16.4, S. 254.

Bei dieser Breite der Eigenschaften der Gebrauchswerte für die praktische Anwendbarkeit führt die übliche Untersuchung der pigmentierten Prüfkörper nicht zu einer ausreichenden Differenzierung der unterschiedlich formulierten Pigmente (Granulate mit Bindemittel).

Eine visuelle Abtestung der Marshall-Prüfkörper zeigt die Verbesserung der mit Öl hergestellten Granulate. Allerdings ist wegen der Rauhigkeit der Oberfläche eine Messung bei dunklen Proben nicht immer reproduzierbar.

Die Farbgebung verschiedener Granulate kann im folgenden Testverfahren ausreichend beschrieben werden.

### Dispergiertest in hellem Bitumen

100 ml eines hellen Bitumens (Mexphalt C, Handelsprodukt der Shell AG) werden auf 180°C erhitzt und dann in eine 250 ml Weißblechdose eingefüllt. Zur Prüfung der Dispergierbarkeit werden mittels Dispermat (Scheibe: Durchmesser 4 cm, 3.500 Umdrehungen/min) jeweils 10 g Pigment bei einer Rührzeit von 20 s eingerührt. Im Anschluß daran wird mit einem Filmzieher (150 µm Schichtdicke) das Bitumen/Pigment-Gemisch aufgezogen.

Die angefertigten Bitumenaufzüge auf verzinkten Blechen werden mit einem Remissionsphotometer (Minolta, Chromameter II) gemessen und die farbmetrischen Daten im CIELAB-System (DIN 5033; DIN 6174) ermittelt. Zur Farbtonnachstellung wird in diesem Fall der a*-Wert gewählt. Es gilt: je größer (im positiven Bereich) der a*-Wert ist, desto roter die Probe. Unterschiede in zwei Einheiten des a*-Wertes liegen innerhalb der Präparationsgenauigkeit und fallen visuell nicht auf. Deutlich sichtbar sind Unterschiede >4 Einheiten des a*-Wertes.

### Dispergiertest in Normalbitumen

Im Gegensatz zu hellen Bitumensorten, wie zuvor dargestellt, ist die Prüfung in normalen Straßenbau-Bitumen aufgrund des sehr dunklen, schwarzen Farbtons nur sehr schwer möglich. Die Pigmentzugabe muß in solchen Fällen etwa auf das Verhältnis 1:1 (Pigment:Bitumen) erhöht werden; im Vergleich hierzu bei hellen Bitumen etwa nur 1:10 (Pigment:Bitumen). Dann sind Unterschiede im Farbton nach dem Dispergierversuch offensichtlich.

Es werden 100 ml Bitumen B 80 (Straßenbau-Bitumen Klasse B 80, Hersteller Shell AG) erhitzt und dann, wie zuvor, 100 g Pigment mittels Dispermat eingerührt. Um ein ausreichend fließfähiges Bitumen zu erhalten, muß auf 230°C erhitzt werden. Das weitere Vorgehen und die Auswertung erfolgen wie oben beschrieben.

Im folgenden wird die Erfindung beispielhaft erläutert, ohne daß hierin eine Einschränkung zu sehen ist.

### Beispiel 1

25 kg Eisenoxidrot Bayferrox 130 (Handelsprodukt der Bayer AG) wurden mit 3 % (0,75 kg) Maschinenöl V 100 ("Energol RC 100 ISO", Handelsprodukt der Dt. BP AG, Schmieröl nach DIN 51 506 VDL, kinematische Viskosität bei 40°C (DIN 51 562) 100 mm²/s) in einem Mischer besprüht und intensiv gemischt. Diese Mischung wurde auf einem herkömmlichen Granulierteller granuliert. Die erhaltenen Granulate weisen größtenteils einen Durchmesser von bis zu 3 mm auf, wenige Granulate hatten Durchmesser von 8 bis 10 mm. Diese Granulate wurden abgetestet nach dem oben beschriebenen Verfahren. Als Vergleichsmaterial diente Pulver von Bayferrox 130, Sprühgranulat ohne Zusatz, Sprühgranulat mit 0,5 % Natriumwasserglas, Sprühgranulat mit 5 % Ligninsulfonat.

| Aufzüge in Mexphalt C¹⁾ Δ a*-Werte nach CIELAB | |
|---|---|
| Probe | Δ a*-Werte²⁾ |
| ohne Pigment | 0 |
| Bayferrox 130 Pulver | 18,6 |
| Granulat mit 3 % Maschinenöl V 100 | 17,4 |
| Granulat mit 0,5 % Natriumwasserglas | 1,4 |
| Granulat mit 5 % Ligninsulfonat | 2,6 |
| Granulat ohne Zusatz | 3,0 |

| | |
|---|---|
| ¹⁾ Handelsprodukt der Shell AG | |
| ²⁾ Δ a* = a*-Wert pigmentierte Probe -a*-Wert unpigmentierte Probe | |

| Aufzüge in B 80-Bitumen³⁾ Δ a*-Werte nach CIELAB | |
|---|---|
| Probe | Δ a*-Werte⁴⁾ |
| ohne Pigment | 0 |
| Granulat mit 3 % Maschinenöl V 100 | 1,1 |
| Granulat mit 0,5 % Natriumwasserglas | 0,2 |
| Granulat mit 5 % Ligninsulfonat⁵⁾ | - |
| Granulat ohne Zusatz | 0,5 |
| Der visuelle Eindruck bestätigt die nach beiden Dispergiertests erhaltenen Ergebnisse: Je höher der a*-Wert, desto ausgeprägter ist der Rotton. Diese Unterscheidung an den Aufstrichen wird bestätigt durch den visuellen Eindruck von Marshall-Prüfkörpern. | |

| | |
|---|---|
| ³⁾ Straßenbau-Bitumen Klasse B 80, Hersteller Shell AG | |
| ⁴⁾ Δ a = a* Wert pigm. Probe - a* Wert unpigm. Probe | |
| ⁵⁾ Zersetzung bei der Einarbeitungstemperatur | |

### Beispiel 2

Je 1 kg Eisenoxid Bayferrox 130 (Handelsprodukt der BAYER AG) wurden mit 3 % geschmolzenem Wachs auf einem herkömmlichen Granulierteller besprüht. Die Granulatschüttung wurde für 10 Minuten über den Schmelzpunkt des jeweiligen Wachses erwärmt. Die erhaltenen Granulate weisen größtenteils einen Durchmesser von 1 bis 5 mm auf. Diese Granulate wurden nach dem oben beschriebenen Verfahren in Mexphalt C (Handelsprodukt der Shell AG) abgetestet. Als Vergleichsmaterial diente Pulver von Bayferrox 130, Sprühgranulat mit 5 % Ligninsulfonat, Granulat mit 3 % Maschinenöl V 100.

| Wachs | Tropfpunkt °C (DIN 51 801) |
|---|---|
| Paraffin | 71 - 75 |
| Luwax A (Polyethylenwachs, Handelsprodukt der BASF AG) | 103 - 110 |
| Luwax EVA 2 (Polyethylenwachs, Handelsprodukt der BASF AG) | 90 - 95 |
| PE 520 (Polyethylenwachs, Handelsprodukt der Hoechst AG) | 119 |

| Aufzüge in Mexphalt C¹⁾ a*-Werte nach CIELAB | |
|---|---|
| Probe | Δa*-Werte²⁾ |
| ohne Pigment | 0 |
| Bayferrox 130 Pulver | 15,8 |
| Granulat mit 3 % Paraffin | 9,9 |
| Granulat mit 3 % Luwax A | 14,9 |
| Granulat mit 3 % Luwax EVA 2 | 11,8 |
| Granulat mit 3 % PE 520 | 10,8 |
| Granulat mit 5 % Ligninsulfonat | 0,5 |
| Granulat mit 3 % Maschinenöl V 100 | 13,5 |

| | |
|---|---|
| ¹⁾ Handelsprodukt der Shell AG | |
| ²⁾ Δ a* = a*-Wert pigmentierte Probe -a*-Wert unpigmentierte Probe | |

## Patentansprüche

1. Verfahren zur Einfärbung von Asphalt und/oder Bitumen mit anorganischen Pigmentgranulaten, dadurch gekennzeichnet, daß anorganische Pigmente unter Zusatz von Ölen, die eine kinematische Viskosität bei 40°C (DIN 51562) von 1,6 bis 1.500 mm²/s aufweisen und/oder Wachsen, Polyolen, Polyethern und Paraffinen mit Tropfpunkten (DIN 51801) zwischen 50 und 180°C als Bindemittel in einer Menge von 0,1 bis 10 Gew.-%, bezogen auf die anorganischen Pigmente, granuliert und mit dem Asphalt und/oder Bitumen vermischt werden.

2. Verfahren gemäß Anspruch 1, dadurch gekennzeichnet, daß die Granulierung durch Aufbaugranulation, Kompaktierung oder Sprühgranulation durchgeführt wird.

3. Verfahren gemäß einem der Ansprüche 1 und 2, dadurch gekennzeichnet, daß die anorganischen Pigmente Eisenoxidrot, Eisenoxidgelb, Chromoxidgrün und/oder Titandioxid sind.

4. Verfahren gemäß einem oder mehreren der Ansprüche 1 bis 3, dadurch gekennzeichnet, daß die Bindemittel in einer Menge von 0,5 bis 6 Gew.-%, bezogen auf die anorganischen Pigmente, zugesetzt werden.

## Claims

1. A process for dyeing asphalt and/or bitumen with inorganic granulated pigments, characterised in that inorganic pigments, to which have been added oils, which possess a kinematic viscosity at 40°C (DIN 51562) of 1.6 to 1,500 mm²/s, and/or waxes, polyols, polyethers and paraffins with dropping points (DIN 51801) of between 50 and 180°C as binding agents in a quantity of 0.1 to 10% by weight, relative to the inorganic pigments, are granulated and mixed with the asphalt and/or bitumen.

2. A process as claimed in Claim 1, characterised in that the granulation is carried out by pelletization, compaction or spray granulation.

3. A process as claimed in one of Claims 1 and 2, characterised in that the inorganic pigments are iron oxide red, iron oxide yellow, chrome oxide green and/or titanium dioxide.

4. A process as claimed in one or more of Claims 1 to 3, characterised in that the binding agents are added in a quantity of 0.5 to 6 % by weight, relative to the inorganic pigments.

## Revendications

1. Procédé pour colorer l'asphalte et/ou le bitume à l'aide de granulés de pigments minéraux, caractérisé en ce que l'on met les pigments minéraux à l'état, de granulés par adjonction d'huiles ayant une viscosité cinématique à 40°C (DIN 51 562) de 1,6 à 1 500 mm²/s et/ou de cires, de polyols, de polyéthers et de paraffines ayant des points de goutte (DIN 51 801) de 50 à 180°C, qui servent de liants, en quantité de 0,1 à 10 % du poids des pigments minéraux, et on mélange avec l'asphalte et/ou le bitume.

2. Procédé selon la revendication 1, caractérisé en ce que la granulation est réalisée par accumulation, par compactage ou par atomisation.

3. Procédé selon l'une des revendications 1 et 2, caractérisé en ce que les pigments minéraux consistent en oxyde de fer rouge, oxyde de fer jaune, oxyde de chrome vert et/ou dioxyde de titane.

4. Procédé selon l'une ou plusieurs des revendications 1 à 3, caractérisé en ce que les liants sont ajoutés en quantité de 0,5 à 6 % du poids des pigments minéraux.
